(19) Europäisches Patentamt
European Patent Office
Office européen des brevets

(11) EP 2 944 494 A1

(12) EUROPEAN PATENT APPLICATION
published in accordance with Art. 153(4) EPC

(43) Date of publication:
18.11.2015 Bulletin 2015/47

(51) Int Cl.:
B60K 6/20 (2007.10)   B60K 6/448 (2007.10)
B60K 6/48 (2007.10)   B60W 10/26 (2006.01)
B60W 20/00 (2006.01)

(21) Application number: 13870811.0

(22) Date of filing: 11.01.2013

(86) International application number:
PCT/JP2013/050493

(87) International publication number:
WO 2014/109065 (17.07.2014 Gazette 2014/29)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Honda Motor Co., Ltd.
Minato-ku
Tokyo 107-8556 (JP)

(72) Inventor: YAMAZAKI Yuichiro
Wako-shi
Saitama 351-0193 (JP)

(74) Representative: Beder, Jens
Mitscherlich PartmbB
Patent- und Rechtsanwälte
Sonnenstraße 33
80331 München (DE)

(54) HYBRID-VEHICLE CONTROL DEVICE AND CONTROL METHOD

(57) A hybrid-vehicle control device of the invention includes an internal combustion engine starting section for starting an internal combustion engine 109 when an integrated value of an internal combustion operation appropriateness, which is derived based on at least a required electric power of a motor 101, an EV output upper limit value and an EV output permitting value, exceeds a first predetermined value while the internal combustion engine 109 stops, and an internal combustion engine stopping section for stopping the internal combustion engine 109 when the integrated value of the internal combustion engine operation appropriateness becomes lower than a second predetermined value which is smaller than the first predetermined value while the internal combustion engine 109 operates.

FIG.2

EP 2 944 494 A1

**Description**

**Technical Field**

The present invention relates to a hybrid-vehicle control device and a control method.

**Background Art**

A hybrid vehicle can be driven by a plurality of energy sources such as electric power, fuel and the like and in various drive modes according to energy sources used. Drive modes of such a hybrid vehicle include, for example, an EV drive mode in which the hybrid vehicle is driven by a motor which is driven by electric power of a battery, a series drive mode in which the hybrid vehicle is driven by the motor which is driven by electric power generated by a generator based on power of an internal combustion engine, and an engine drive mode in which the hybrid vehicle is driven by the internal combustion engine which drives directly drive wheels. A hybrid vehicle which can be driven by switching its drive mode among these drive modes (for example, refer to Patent Literature 1) is proposed as a related art.

**Prior Art Literature**

**Patent Literature**

Patent Literature 1: JP-A-H09-224304

**Summary of the Invention**

**Problem that the Invention is to Solve**

In the hybrid vehicle described in Patent Literature 1, the drive mode is switched from the mode in which the hybrid vehicle is driven by operating solely the motor (EV drive mode) to the mode in which the hybrid vehicle is driven by operating solely the internal combustion engine (engine drive mode) as required torque increases. However, when the internal combustion engine drives directly the drive wheels, because there is imposed a limitation on the setting of ratios such as a reduction gear ratio, there may be a situation in which it is difficult to operate the internal combustion engine at an operation point where a good fuel economy is obtained. In view of these facts, because operation points where to operate the internal combustion engine can freely be selected in the series drive mode, it is preferable that the drive mode is switched from the EV drive mode to the series drive mode and from the series drive mode to the EV drive mode.

In addition, when the drive mode is switched based on required torque which is necessary to drive the vehicle, because the hybrid vehicle is driven in the EV drive mode irrespective of the fact that the battery cannot output required electric power corresponding to the required torque depending upon remaining capacity (SOC: State Of Charge) and temperature of the battery, there is a possibility that drivability is deteriorated. Additionally, as this occurs, there is also a possibility that the battery is excessively discharged.

The invention has been made in view of the problem described above, and an object thereof is to provide a hybrid-vehicle control device and a control method, which enable to enhance energy efficiency and drivability.

**Means for Solving the Problem**

With a view to achieving the object, according to an invention set forth in claim 1, there is provided a control device of a hybrid vehicle including an internal combustion engine (for example, an internal combustion engine 109 in an embodiment which will be described later), a motor (for example, a motor 101 in the embodiment), a generator (for example, a generator 107 in the embodiment) which generates electric power based on power of the internal combustion engine, and a battery (for example, a battery 113 in the embodiment) which stores electric power generated by the motor or the generator to supply the electric power to the motor, wherein the hybrid vehicle is able to drive in an EV drive mode in which the motor is driven by electric power of the battery only and a series drive mode in which the motor is driven by electric power generated by the generator based on power of the internal combustion engine, and the control device has:

a required driving force deriving section (for example, a management ECU 119 in the embodiment) for deriving a required driving force required on the motor based on a vehicle speed and an accelerator pedal opening,
a required electric power deriving section (for example, the management ECU 119 in the embodiment) for deriving required electric power based on the required driving force and a rotational speed of the motor,

an EV output upper limit value deriving section (for example, the management ECU 119 in the embodiment) for deriving an EV output upper limit value which is a maximum value that the battery enables to output based on a remaining capacity of the battery and a temperature of the battery,

an EV output permitting value deriving section (for example, the management ECU 119 in the embodiment) for deriving an EV output permitting value from an upper limit value of an output which satisfies {(a loss produced when the hybrid vehicle is driven in the EV drive mode) + (a loss produced when electric power corresponding to electric power consumed in the EV drive mode is generated)} < (a loss produced in the series drive mode), based on a remaining capacity of the battery and a temperature of the battery,

an internal combustion engine operation appropriateness deriving section (for example, the management ECU 119 in the embodiment) for deriving an internal combustion engine operation appropriateness based on at least the required electric power, the EV output upper limit value and the EV output permitting value,

an internal combustion engine starting section (for example, the management ECU 119 in the embodiment) for starting the internal combustion engine when an integrated value of the internal combustion engine operation appropriateness exceeds a first predetermined value while the internal combustion engine stops, and

an internal combustion engine stopping section (for example, the management ECU 119 in the embodiment) for stopping the internal combustion engine when an integrated value of the internal combustion engine operation appropriateness becomes lower than a second predetermined value which is lower than the first predetermined value while the internal combustion engine operates.

According to an invention set forth in claim 2, there is provided the control device of the hybrid vehicle according to claim 1,

wherein the internal combustion engine operation appropriateness deriving section has an appropriateness deriving section (for example, the management ECU 119 in the embodiment) for deriving an EV drive mode appropriateness and a series drive appropriateness by performing a fussy determination logic based on the required electric power from a membership function which is set based on the EV output upper limit value and the EV output permitting value, and the appropriateness deriving section derives the internal combustion engine operation appropriateness based on at least the EV drive mode appropriateness and the series drive mode appropriateness.

According to an invention set forth in claim 3, there is provided the control device of the hybrid vehicle according to claim 1 or 2,

wherein the internal combustion engine operation appropriateness deriving section has a coefficient deriving section for deriving an EV appropriateness coefficient based on the accelerator pedal opening and a brake pedal depressing effort, and

the appropriateness deriving section derives the internal combustion engine operation appropriateness based on the EV appropriateness coefficient, the EV drive mode appropriateness and the series drive mode appropriateness.

According to an invention set forth in claim 4, there is provided the control device of the hybrid vehicle according to any one of claims 1 to 3,

wherein the EV output upper limit value and the EV output permitting value are set by a smaller value of values which are derived individually based on a remaining capacity of the battery and a temperature of the battery.

According to an invention set forth in claim 5, there is provided the control device of the hybrid vehicle according to any one of claims 1 to 4,

wherein the EV output upper limit value and the EV output permitting value are set smaller as a remaining capacity of the battery decreases.

According to an invention set forth in claim 6, there is provided the control device of the hybrid vehicle according to any one of claims 1 to 5,

wherein the EV output upper limit value and the EV output permitting value are set smaller as a temperature of the battery decreases.

According to an invention set forth in claim 7, there is provided the control device of the hybrid vehicle according to any one of claims 1 to 6,

wherein the internal combustion engine stopping section stops the internal combustion engine when an integrated value of the internal combustion engine operation appropriateness becomes lower than the second predetermined value and a remaining capacity of the battery is equal to or larger than a predetermined value while the internal combustion engine operates.

According to an invention set forth in claim 8, there is provided the control device of the hybrid vehicle according to claim 7,

wherein the internal combustion engine operation stopping section stops the internal combustion engine when an integrated value of the internal combustion engine operation appropriateness becomes lower than the second predetermined value, a remaining capacity of the battery is equal to or larger than the predetermined value, and a maximum value which the battery enables to output is equal to or larger than a predetermined value while the internal combustion engine operates.

According to an invention set forth in claim 9, there is provided a control method of a hybrid vehicle including an internal combustion engine, a motor, a generator which generates electric power based on power of the internal combustion engine, and a battery which stores electric power generated by the motor or the generator to supply the electric power to the motor,

wherein the hybrid vehicle is able to drive in an EV drive mode in which the motor is driven by electric power of the battery only and a series drive mode in which the motor is driven by electric power generated by the generator based on power of the internal combustion engine,

the control method has the steps of:

deriving a required driving force required on the motor based on a vehicle speed and an accelerator pedal opening, deriving required electric power based on the required driving force and a rotational speed of the motor, deriving an EV output upper limit value which is a maximum value that the battery enables to output, based on a remaining capacity of the battery and a temperature of the battery, deriving an EV output permitting value from an upper limit value of an output which satisfies {(a loss produced when the hybrid vehicle is driven in the EV drive mode) + (a loss produced when electric power corresponding to electric power consumed in the EV drive mode is generated)} < (a loss produced in the series drive mode), based on a remaining capacity of the battery and a temperature of the battery, deriving an internal combustion engine operation appropriateness based on at least the required electric power, the EV output upper limit value and the EV output permitting value, starting the internal combustion engine when an integrated value of the internal combustion engine operation appropriateness exceeds a first predetermined value while the internal combustion engine stops, and stopping the internal combustion engine when an integrated value of the internal combustion engine operation appropriateness becomes lower than a second predetermined value which is lower than the first predetermined value while the internal combustion engine operates.

**Advantage of the Invention**

According to the inventions set forth in claims 1 and 9, the start and stop of the internal combustion engine are determined according to the EV output upper limit value, which is set according to the state of the battery, the EV output permitting value and the required electric power, and therefore, it is possible not only to ensure a desired required electric power but also to prevent the over-discharge of the battery, thereby making it possible to enhance the energy efficiency. In addition, the start and stop of the internal combustion engine are determined based on the integrated value of the internal combustion engine operation appropriateness and the threshold having a hysteresis width, and therefore, the internal combustion engine does not have to be controlled unnecessarily. This enables a more accurate control which takes the intension of the user into consideration.

According to the invention set forth in claim 2, whether or not to start the internal combustion engine is determined by performing the fussy determination based on the required electric power, and therefore, there is eliminated occurrence that the shortage of driving force results from the shortage of output from the battery, and also, there is eliminated occurrence that the internal combustion engine is controlled unnecessarily.

According to the invention set forth in claim 3, the intention of the user such as the accelerator pedal opening and the brake pedal depressing effort is taken into consideration, and therefore, it is possible to enhance the drivability, thereby making it possible to enhance the energy efficiency further.

According to the inventions set forth in claims 4 to 6, it is considered that the electric power that can be outputted is reduced depending upon the SOC and temperature of the battery, and therefore, it is possible to ensure the required electric power.

According to the invention set forth in claim 7, the stop of the internal combustion engine is determined by taking further the SOC of the battery into consideration, and therefore, there is eliminated occurrence that the shortage of driving force results from the shortage of output from the battery.

According to the invention set forth in claim 8, the stop of the internal combustion engine is determined by taking further the output of the battery, and therefore, there is eliminated occurrence that the shortage of driving force results from the shortage of output from the battery.

Brief Description of the Drawings

Fig. 1 is an exemplary diagram showing a hybrid vehicle to which a control device of the embodiment is applied.
Fig. 2 is an explanatory diagram showing a detailed configuration of the hybrid-vehicle control device of the embodiment.
Fig. 3 is an explanatory diagram showing a detailed configuration of a MOT required electric power deriving block shown in Fig. 2.
Fig. 4 is an explanatory diagram showing a detailed configuration of an ENG GEN control block shown in Fig. 2.
Fig. 5 is an exemplary diagram showing a detailed configuration of an ENG start determination block shown in Fig. 2.
Fig. 6 is an exemplary diagram showing a detailed configuration of an ENG stop determination block shown in Fig. 2.
Fig. 7 is an explanatory diagram of driving mode appropriateness estimation.
Fig. 8 is an explanatory diagram of an EV output upper limit value and an EV output permitting value.
Fig. 9 is an explanatory diagram showing a detailed configuration of a fussy determination block shown in Figs. 5 and 6.
Fig. 10 is a flowchart showing operations of the hybrid-vehicle control device of the embodiment.
Fig. 11 is a flowchart showing operations of an engine start determination.
Fig. 12 is a flowchart showing operations of an engine stop determination.
Fig. 13 is a flowchart showing operations of a fussy determination.

## Mode for Carrying out the Invention

Hereinafter, an embodiment of the invention will be described based on the accompanying drawings. It is noted that the drawings are seen in such a way that reference numerals or characters given thereto look properly.

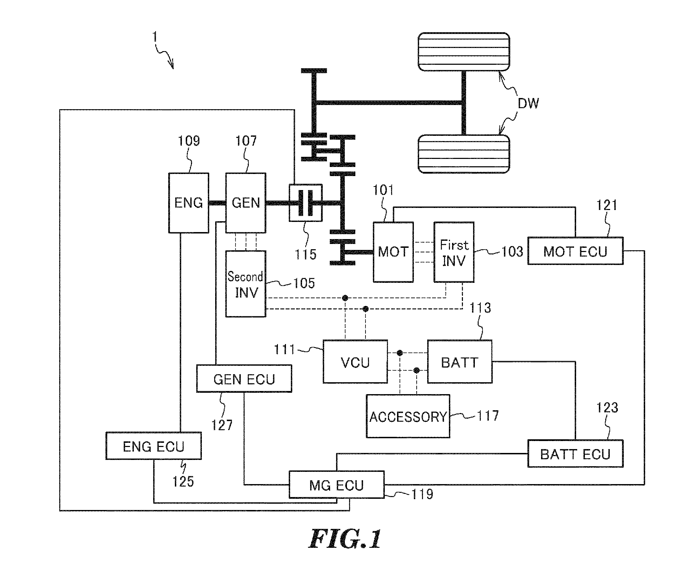

An HEV (Hybrid Electric Vehicle) has a motor and an internal combustion engine, and is driven by a driving force of the motor or the internal combustion engine depending upon the driving condition of the vehicle. Fig. 1 is an exemplary diagram showing an internal configuration of the HEV (hereinafter, referred to simply as a "vehicle") of this embodiment. As shown in Fig. 1, the vehicle 1 of the embodiment has left and right drive wheels DW, DW, a motor (MOT) 101, a first inverter (first INV) 103, a second inverter (second INV) 105, a generator (GEN) 107, an internal combustion engine (ENG) 109, a two-way type voltage raising/lowering converter (VCU) (hereinafter, referred to simply as a "converter") 111, a battery (BATT) 113, a clutch 115, an accessory (ACCESSORY) 117, a management ECU (MG ECU) 119, a motor ECU (MOT ECU) 121, a battery ECU (BATT ECU) 123, an engine ECU (ENG ECU) 125, and a generator ECU (GEN ECU) 127.

The motor 101 is, for example, a three-phase alternating current motor. The motor 101 generates power (torque) for driving the vehicle. Torque generated in the motor 101 is transmitted to a drive shaft of the drive wheels DW, DW. In decelerating the vehicle, when a driving force is transmitted to the motor 101 from the drive wheels DW, DW via the drive shaft, the motor 101 functions as a generator to generate a so-called regenerative braking force and recovers the kinetic energy of the vehicle as electrical energy (regenerative energy) so as to charge the battery 113. The motor ECU 121 controls an operation and a state of the motor 101 according to an instruction from the management ECU 119.

The multi-cylinder internal combustion engine (hereinafter, referred to simply as the "internal combustion engine") 109 outputs power by which the generator 107 generates electric power, with the clutch 115 disengaged. With the clutch 115 engaged, the internal combustion engine 109 generates power (torque) for driving the vehicle. Torque generated in the internal combustion engine 109 in the state is transmitted to the drive shaft of the drive wheels DW, DW via the generator 107 and the clutch 115. The engine ECU 125 controls a start and a stop and a rotational speed of the internal combustion engine 109 according to a command from the management ECU 119.

The generator 107 is driven by the internal combustion engine 109 to generate electric power. An alternating current voltage generated in the generator 107 is converted to a direct current voltage by the second inverter 105. The direct current voltage converted by the second inverter 105 is lowered by the converter 111 to charge the battery 113, or is converted to an alternating current voltage via the first inverter 103 to be thereafter supplied to the motor 101. The generator ECU 127 controls the rotational speed of the generator 107 and power to be generated by the generator 107 according to a command from the management ECU 119.

The battery 113 has a plurality of battery cells which are connected in series and supplies a high voltage of 100 to 200 V, for example. The voltage of the battery 113 is raised by the converter 111 so as to be supplied to the first inverter 103. The first inverter 103 converts the direct current voltage from the battery 113 to an alternating current voltage and supplies a three-phase current to the motor 101. Information about the SOC and temperature of the battery 113 are inputted into the battery ECU 123 from sensors, not shown. The information are sent to the management ECU 119.

The clutch 115 engages or disengages (engages/disengages) a transmission path of driving force from the internal combustion engine 109 to the drive wheels DW, DW based on an instruction of the management ECU 119. With the clutch 115 disengaged, the driving force from the internal combustion engine 109 is not transmitted to the drive wheels DW, DW, whereas with the clutch 115 engaged, the driving force from the internal combustion engine 109 is transmitted to the drive wheels DW, DW.

The accessory 117 includes, for example, a compressor of an air conditioner which controls the temperature inside a passenger compartment, audio equipment, lights and the like and operates based on electric power supplied from the battery 113. Energy consumed by the accessory 117 is monitored by a sensor, not shown, and information on the consumed energy is sent to the management ECU 119.

The management ECU 119 switches transmission systems of driving force and controls and monitors the driving of the motor 101, the first inverter 103, the second inverter 105, the internal combustion engine 109, and the accessory 117. In addition, inputted into the management ECU 119 are vehicle speed information from a vehicle speed sensor, not shown, information about the opening of an accelerator pedal, not shown, (AP opening), information about depressing effort of a brake pedal, not shown, and information from a shift range, an HEV switch and a charge switch, which are not shown. Additionally, the management ECU 119 instructs the motor ECU 121, the battery ECU 123, the engine ECU 125 and the generator ECU 127.

The vehicle 1 can execute an "SOC recovery mode" when the user operates the charge switch, not shown. In this SOC recovery mode, by controlling the internal combustion engine 109 so as to increase the power to be generated by the generator 107 and controlling the charge and discharge of the battery 113, the SOC of the battery 113 can be increased.

The vehicle 1, which is configured as described above, can be driven in various drive modes having different drive sources such as an "EV drive mode," a "series drive mode," and an "engine drive mode," depending upon the driving conditions thereof. Hereinafter, the drive modes in which the vehicle 1 can drive will be described.

In the EV drive mode, the motor 101 is driven only by electric power from the battery 113, whereby the drive wheels DW, DW are driven to drive the vehicle 1. As this occurs, the internal combustion engine 109 is not driven, and the clutch 115 is in a disengaged state.

In the series drive mode, the generator 107 generates electric power based on the power of the internal combustion engine 109, and the motor 101 is driven by the electric power generated, whereby the drive wheels DW, DW are driven to drive the vehicle 1. As this occurs, the clutch 115 is in the disengaged state. This series drive mode includes a "battery input/output zero mode," a "in-drive charging mode," and an "assist mode."

In the battery input/output zero mode, the electric power generated in the generator 107 by using the power of the internal combustion engine 109 is supplied to the motor 101 via the second inverter 105 and the first inverter 103, whereby the motor 101 is driven, which drives the drive wheels DW, DW to drive the vehicle 1. Namely, the generator 107 generates only the required electric power, and no substantial input into or output from the battery 113 is performed.

In the in-drive charging mode, the electric power generated in the generator 107 by using the power of the internal combustion engine 109 is supplied directly to the motor 101, whereby the motor 101 is driven, which drives the drive wheels DW, DW to drive the vehicle 1. At the same time, the electric power generated in the generator 107 by using the power of the internal combustion engine 109 is also supplied to the battery 113, whereby the battery 113 is charged. Namely, the generator 107 generates more electric power than required, and a portion of the electric power generated which corresponds to the required electric power is supplied to the motor 101, while a residual portion is charged in the battery 113.

When the required electric power required on the motor 101 exceeds all the electric power that the generator 107 can generate, the assist mode is used to drive the vehicle 1. In the assist mode, both the electric power generated in the generator 107 by using the power of the internal combustion engine 109 and the electric power from the battery 113 are supplied to the motor 101, whereby the motor 101 is driven, which drives the drive wheels DW, DW to drive the vehicle 1.

In the engine drive mode, the clutch 115 is engaged based on an instruction from the management ECU 119, whereby the drive wheels DW, DW are driven directly by the power of the internal combustion engine 109, whereby the vehicle 1 is driven. As this occurs, in order to prevent the generator 107 from being a load of the internal combustion engine 109, the generator 107 is driven by electric power supplied from the battery 113 so as to rotate together with a rotational shaft of the internal combustion engine 109.

In switching these drive modes, a hybrid-vehicle control device according to this embodiment determines which of the EV drive mode and the series drive mode is more appropriate to a required driving force required on the vehicle 1 based on a required electric power required on the motor 101 which corresponds to the required driving force required on the vehicle 1. In the event that it is determined while the vehicle 1 is being driven in the EV drive mode that the series drive mode is more appropriate than the EV drive mode, the internal combustion engine 109 is started, and the drive mode is switched from the EV drive mode to the series drive mode. On the contrary, in the event that it is determined while the vehicle 1 is being driven in the series drive mode that the EV drive mode is more appropriate than the series drive mode, the internal combustion engine 109 is stopped, and the drive mode is switched from the series drive mode to the EV drive mode.

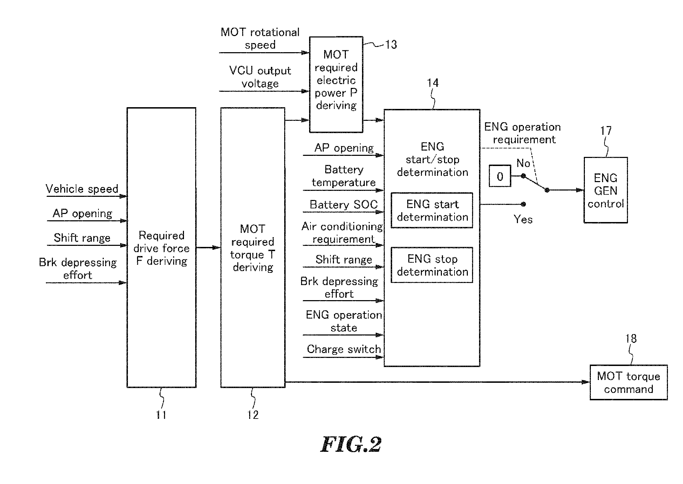

A determination on requirement of the operation of the internal combustion engine 109 and a drive mode switching control will be described in detail below. Fig. 2 is an explanatory diagram showing a detailed configuration of the hybrid-vehicle control device shown in Fig. 1. Firstly, the management ECU 119 (a required driving force deriving section 11) derives a required driving force F required on the internal combustion engine 109 to drive the vehicle based on information on the accelerator pedal opening, the vehicle speed, the state of a gear or shift range, the depressing effort of a brake pedal and the like. Following this, the management ECU 119 (a MOT required torque deriving section 12) derives required torque T required on the motor 101 based on a value obtained by causing the required driving force F obtained to pass through a low-pass filter, not shown.

Next, the management ECU 119 (a MOT required electric power deriving section 13) derives a required electric power P required on the motor 101 based on the required torque T of the motor 101, a voltage supplied after having been raised by the converter 111 (a VCU output voltage), and the current rotational speed of the motor 101 (a MOT rotational speed).

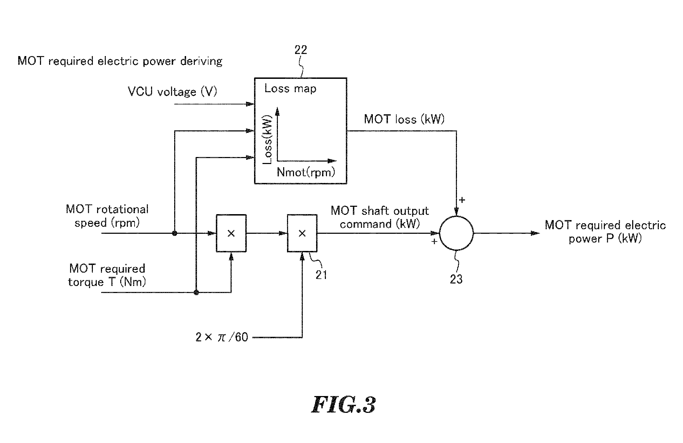

Fig. 3 is an explanatory diagram showing a detailed configuration of the MOT required electric power deriving section 13. In deriving a required electric power required on the motor 101, the management ECU 119 (a MOT shaft output command calculation block 21) calculates a MOT shaft output command which is a value that the motor 101 should output based on the required torque and rotational speed of the motor 101. The MOT shaft output command is calculated based on Equation (1) below.

$$\text{MOT shaft output command (kW)} = \text{MOT required torque (N)} \times \text{MOT rotational}$$

$$\text{speed (rpm)} \times 2\pi/60 \qquad \dots (1)$$

In addition, the management ECU 119 (a motor loss deriving block 22) derives a loss produced in the motor 101 by retrieving a loss map stored in a memory, not shown, based on the required torque T of the motor 101, the rotational speed of the motor 101 and the VCU output voltage. This motor loss includes all the losses that can be produced such as switching loss, thermal loss, loss in the converter and the like.

Then, the management ECU 119 (a required electric power deriving block 23) derives a required electric power P to which the aforesaid losses are added by adding the motor 101 shaft output command and the motor loss.

Returning to Fig. 2, the management ECU 119 (an ENG start/stop determination section 14) determines whether or not the operation of the internal combustion engine 109 is required, that is, whether the internal combustion engine 109 is required to be started or stopped based on the required electric power P of the motor 101 derived. When the internal combustion engine 109 is required to operate (an ENG operation requirement), the management ECU 119 (an ENG GEN control section 17) controls the internal combustion engine 109 and the generator 107.

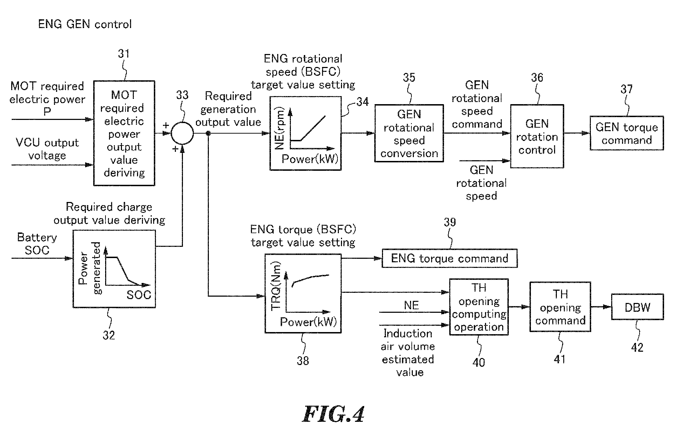

Fig. 4 is an explanatory diagram showing a detailed configuration of the ENG GEN control section 17. Firstly, the management ECU 119 (a MOT required generating output value deriving block 31) derives a MOT required generating output value which is an output value that the generator 107 should generate to supply the required electric power of the motor 101 based on the required electric power P of the motor 101 and the voltage supplied after having been raised by the converter 111 (the VCU output voltage).

It is desirable that the battery 113 is charged when an SOC to be attained (a target SOC) is set and the current SOC is lower than the target SOC. Consequently, the management ECU 119 derives a required charging output value which corresponds to a charge capacity which is necessary to attain the target SOC based on the current SOC of the battery 113 (a required charging output value deriving block 32). Additionally, the management ECU 119 derives a required generating output value by adding the MOT required generating output value and the required charging output value together (a required generating output value deriving block 33).

The management ECU 119 (an ENG rotational speed target value deriving block 34) derives a rotational speed target value for the internal combustion engine 109 which corresponds to the required generating output value based on the required generating output value derived by retrieving a BSFC (Brake Specific Fuel Consumption: net fuel consumption rate) map regarding the rotational speed of the internal combustion engine 109. This ENG rotational speed target value is a rotational speed at which the best fuel consumption efficiency relative to the required generating output value is obtained. However, in the internal combustion engine 109, a fuel injection amount is determined only in relation to an induction air volume, and therefore, it is difficult to control so that the rotational speed of the internal combustion engine 109 coincides with the ENG rotational speed target value. Then, the rotational speed of the internal combustion engine 109 is controlled by controlling the generation capacity of the generator 107 through controlling the rotational speed and torque of the generator 107 which is connected to a crankshaft, not shown, of the internal combustion engine 109 by using the generator ECU 127. Consequently, the ENG rotational speed target value is converted to the rotational speed of the generator 107 (a GEN rotational speed conversion block 35) to control the rotation of the generator 107 (a GEN rotation control block 36), and a GEN torque command is sent to the generator ECU 127 (a GEN torque command block 37).

In addition, the management ECU 119 (a ENG torque target value deriving block 38) derives a torque target value for the internal combustion engine 109 which corresponds to the required generating output value based on the required generating output value by retrieving a BSFC map regarding the torque of the rotational engine 109. The management ECU 119 (GEN torque command block 39) sends an ENG torque command based on this ENG torque target value to the engine ECU 125. Additionally, the management ECU 119 (a TH opening computing operation block 40) executes a computing operation of throttle opening based on the torque target value derived, the current rotational speed of the internal combustion engine 109, and an estimated value of induction air volume estimated based on the torque target value and the current rotational speed of the internal combustion engine 109. Then, the management ECU 119 (DBW block 42) executes a DBW (Drive by Wire) control based on a derived throttle opening command (a TH opening command block 41). This drives the vehicle 1 in the series drive mode.

Returning to Fig. 2, when it is determined that no ENG operation request is made in the ENG start/stop determination section 14, the vehicle 1 is driven in the EV drive mode by supplying the electric power of the battery 113 to the motor without operating the internal combustion engine 109. Consequently, the internal combustion engine 109 and the generator 107 are not controlled.

In addition, whether or not the ENG operation request is made, the management ECU 119 (a MOT torque command section 18) sends a torque command for the motor 101 to the motor ECU121 based on the required torque derived in the MOT required torque deriving section 12. The motor ECU 121 controls the motor 101 based on the MOT torque command.

Information on the current operating state of the internal combustion engine 109 is inputted into the ENG start/stop determination section 14. When the internal combustion engine 109 is stopped currently, it is determined whether or not the internal combustion engine 109 is to be started (an ENG start determination section 15). When the internal combustion engine 109 is in operation currently, it is determined whether or not the internal combustion engine 109 is to be stopped (an ENG stop determination section 16).

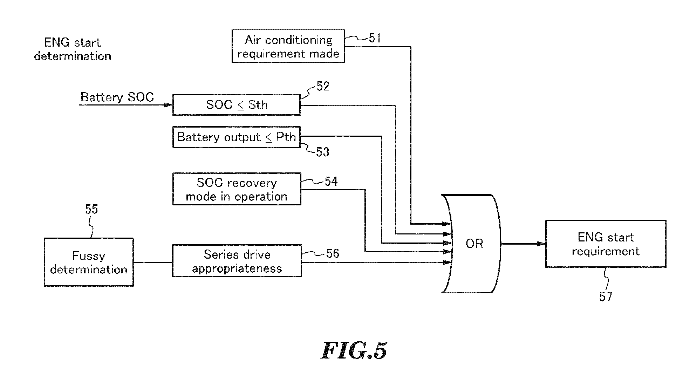

Fig. 5 is an explanatory diagram showing a detailed configuration of the ENG start determination section 15. Here, when any of conditions which will be described later is not satisfied, the management ECU 119 determines that the start of the internal combustion engine 109 is requested (an ENG start requirement block 57). Hereinafter, these conditions will be described in detail.

Firstly, when air conditioning such as cooling or heating the air inside the passenger compartment is required, the electric power of the battery 113 is consumed much, and the necessity of starting the internal combustion engine 109 is high due to heat generated by the internal combustion engine 109 being used for heating. Consequently, when air conditioning such as cooling or heating the air inside passenger compartment is made, it is determined that the internal combustion engine 109 is required to start its operation (an air conditioning requirement determination block 51). Furthermore, when air conditioning such as cooling and heating the air is requested and a temperature of cooling water of the internal combustion engine 109 is lower than a predetermined value, this determination may be determination that the start of the internal combustion engine 109 is requested.

In addition, when the SOC of the battery 113 is low, because a sufficient output cannot be obtained from the battery 113, it is difficult to drive the vehicle 1 in the EV drive mode, and hence, the necessity is high of driving the internal combustion engine 109 for charging the battery 113. Consequently, when the SOC of the battery 113 is lower than a predetermined threshold Sth, it is determined that the internal combustion engine 109 is required to start its operation (an SOC determination block 52). In this case, in order to prevent the frequent occurrence of start and stop of the internal combustion engine 109, the determination is made by a threshold having a constant hysteresis width.

In addition, even though the SOC of the battery 113 is equal to or larger than the predetermined value, depending upon the deteriorated state and temperature of the battery 113, there may be a situation in which a sufficient output cannot be obtained from the battery 113. Consequently, when a maximum value that the battery 113 can output is equal to or smaller than a predetermined threshold Pth, it is determined that the internal combustion engine 109 is required to start its operation (a battery output determination block 53).

Additionally, when the "SOC recovery mode" is being executed by the user operating the charge switch, in order to increase the SOC of the battery 113, the necessity is high of causing the generator 107 to generate electric power by using the driving force of the internal combustion engine 109 to drive the vehicle 1 in the series drive mode. Consequently, while the SOC recovery mode is being executed, it is determined that the internal combustion engine 109 is required to start its operation (an SOC recovery mode determination block 54).

Even though any of the conditions described above is met, in the event that a fussy determination, which will be described later, is performed (a fussy determination block 55) to determine that the current driving condition is appropriate to the series drive mode, it is determined that the internal combustion engine 109 is required to start its operation (a series drive appropriateness block 56).

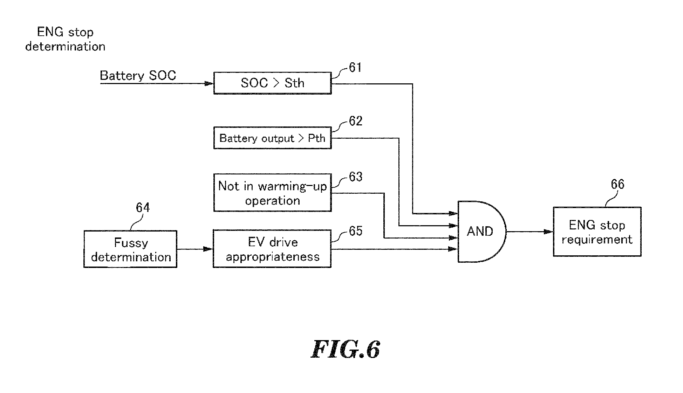

Fig. 6 is an explanatory diagram showing a detailed configuration of the ENG stop determination section 16. Here, the management ECU 119 determines that the internal combustion engine 109 is required to stop its operation only when all conditions which will be described below are met (an ENG stop requirement block 66). Hereinbelow, these conditions will be described in detail.

Firstly, in order for the vehicle to be driven in the EV drive mode with the internal combustion engine 109 stopped, the SOC of the battery 113 needs to be high to some extent. Consequently, when the SOC of the battery 113 is equal to or smaller than the predetermined threshold Sth, it is determined that the internal combustion engine 109 is not required to stop its operation (an SOC determination block 61). This threshold Sth has a constant hysteresis width and prevents the frequent occurrence of start and stop of the internal combustion engine 109. When the SOC of the battery 113 exceeds the threshold Sth, it is determined whether or not the other conditions are met.

In addition, in the event that the SOC of the battery 113 is equal to or larger than the predetermined value, there may be a situation in which a sufficient output cannot be obtained from the battery 113 depending upon the deteriorated state and temperature of the battery. Consequently, when the maximum value that the battery 113 can output is equal to or smaller than the predetermined threshold Pth, it is determined that the internal combustion engine 109 is not required to stop its operation (a battery output determination block 62). When the output of the battery 113 exceeds the threshold Pth, it is determined whether or not the other conditions are met.

When the internal combustion engine 109 is stopped while the internal combustion engine 109 is being warmed up, there is a possibility that the temperature of a catalyst is not increased to a sufficient extent, whereby a sufficient cleaning performance cannot be obtained. Consequently, when the internal combustion engine 109 is being warmed up, it is determined that the internal combustion engine 109 is not required to stop its operation (a heating operation determination block 63). When the internal combustion engine 109 is not being warmed up, it is determined whether or not the other conditions are met.

When all the conditions described above are met, the fussy determination, which will be described later, is performed (a fussy determination block 64). When it is determined in the fussy determination that the current driving condition is appropriate to the series drive mode, it is determined that the internal combustion engine 109 is not required to stop its operation. When it is determined as a result of the fussy determination that the current driving condition is appropriate to the series drive mode (an EV appropriateness block 65) and the other conditions are all met, it is determined that the internal combustion engine 109 is required to stop its operation.

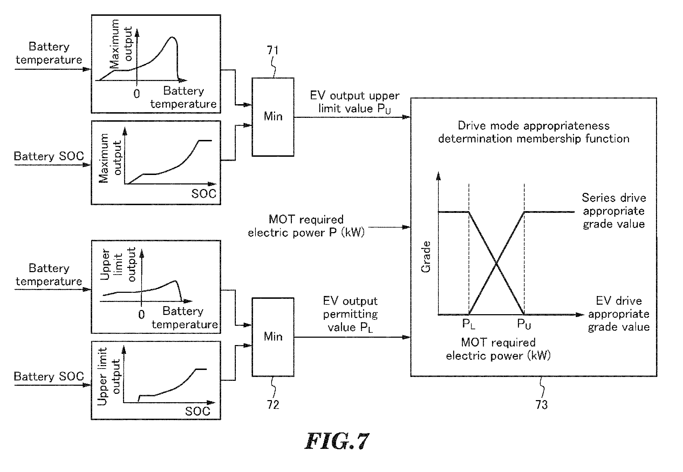

Fig. 7 is an explanatory diagram which explains a series drive appropriateness determination made in the fussy determination block 55 and the fussy determination block 64. Firstly, the management ECU 119 sets an EV output upper limit value Pu and an EV output permitting value $P_L$ based on the SOC and temperature of the battery 113.

The EV output upper limit value Pu of the battery 113 is an upper limit value of electric power that the battery 113 can supply while the vehicle 1 is driven in the EV drive mode. Consequently, the management ECU 119 derives maximum electric powers that the battery 113 can output based individually on the SOC and temperature of the battery 113 and sets a lower value of these values derived as an EV output upper limit value Pu of the battery 113 (an EV output upper limit value setting block 71). It is noted that data regarding the maximum electric powers that the battery 113 can supply according to the SOC and temperature of the battery 113 is stored in a memory, not shown.

In contrast with the EV output upper value Pu, the EV output permitting value $P_L$ is a boundary value between an area which contributes to the enhancement of fuel economy when the vehicle is driven in the EV drive mode and an area which contributes to the enhancement of fuel economy when the vehicle is driven in the series drive mode. This value is set in the following way.

In the EV drive mode, the vehicle is driven by supplying the electric power of the battery 113 to the motor 101. As this occurs, a loss is produced when the direct current voltage of the battery 113 is converted to an alternating current voltage in the first inverter 103. In addition, the SOC of the battery 113 is reduced when the electric power of the battery 113 is supplied. However, the SOC of the battery 113 which is so reduced needs to be recovered to the original value by generating electric power in the generator 107 by using the power of the internal combustion engine 109 at any future point in time. A loss is also produced when the generator 107 generates electric power by using the power of the internal combustion engine 109 to recover the SOC of the battery 113. Consequently, a total loss $L_{EV}$ that is produced in the EV drive mode is made up of a total sum of the loss produced when the electric power is supplied from the battery 113 to the motor 101, the loss produced when the motor 101 is driven and the loss produced when the generator 107 generates electric power later.

In contrast with the series drive mode, the generator 107 generates more electric power than required by using the power of the internal combustion engine 109, and the motor 101 is driven by the electric power so generated to drive the vehicle. A loss is produced individually when the generator 107 generates electric power by using the power of the internal combustion engine 109 and when the motor 101 is driven. Consequently, a total loss $L_{SE}$ produced in the series drive mode is made up of a total sum of the loss produced when the generator 107 generates electric power and the loss produced when the motor 101 is driven.

The management ECU 119 derives output upper limit values of the battery 113 within such an extent that the total loss $L_{EV}$ produced in the EV drive mode does not surpass the total loss $L_{SE}$ produced in the series drive mode based individually on the SOC and temperature of the battery 113 and sets a smaller value of the output upper limit values derived as an EV output permitting value $P_L$ (an EV output permitting value setting block 72). It is noted that data regarding the output upper limit values corresponding to the SOC and temperature of the battery 113 within the extent in which $L_{EV}$ does not surpass $L_{SE}$ is obtained in advance through experiments and is stored in a memory, not shown, or the like.

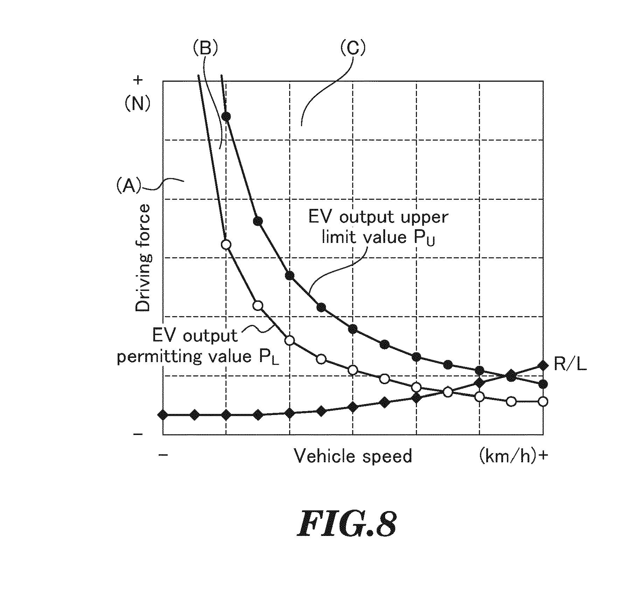

Fig. 8 is an explanatory diagram showing EV output upper limit value Pu and EV output permitting value $P_L$. In the figure, an axis of abscissas represents vehicle speed (km/h) and an axis of ordinates represents driving force (N). It is noted that in the figure, reference character R/L denotes driving resistance on a flat ground.

When required electric power P > EV output upper limit value Pu, it is difficult to supply the required electric power P only by the battery 113 in an area (C) in Fig. 8. Consequently, the vehicle cannot be driven in the EV drive mode in the area (C), and hence, it is determined that a necessity is high of driving the vehicle in the series drive mode.

When required electric power P < EV output permitting value $P_L$, the required electric power P is not that large in an area (A) in Fig. 8, and therefore, the consumed electric power of the battery 113 is not that large accordingly, resulting in a situation in which electric power to be generated later is not that large. Consequently, the losses that are described as being produced at the relevant events do not become that large, which results in $L_{EV} < L_{SE}$. Consequently, it is preferable that the vehicle is driven in the EV drive mode in the area (A) from the viewpoint of fuel economy.

When EV output permitting value $P_L \leq$ required electric power P $\leq$ EV output upper value Pu, the required electric power P does not surpass the EV output upper limit value Pu in an area (B), and therefore, the required electric power P can be supplied only by the battery 113, whereby the vehicle can be driven in the EV drive mode. However, the required electric power P is relatively large, and therefore, the consumed electric power of the battery 113 also becomes relatively large, which causes electric power to be generated later to become relatively large. Thus, $L_{EV} \geq L_{SE}$. Because of this, it is desirable that the vehicle is driven in the series drive mode in the area (B) from the viewpoint of energy efficiency.

As has been described above, the value of the required electric power P determines which is more desirable to drive the vehicle 1 in the EV drive mode and to drive the vehicle 1 in the series drive mode. However, because the required electric power P changes at all times, in this embodiment, the frequent occurrence of start and stop of the internal combustion engine 109 is prevented by performing a fussy inference. As shown in Fig. 7, the management ECU 119 sets a drive mode appropriateness determination membership function from the EV upper limit value Pu and the EV output permitting value $P_L$ of the battery 113. Then, a fussy determination is performed from the following linguistic control rules to thereby derive a drive mode appropriateness (a series drive appropriate grade value and EV drive appropriate grade value) to the current required electric power P (a drive mode appropriateness deriving block 73).

<Linguistic Control Rules>

(1) When the MOT required electric power is smaller than $P_L$, the series drive appropriate grade value is small, while the EV appropriate grade value is large.
(2) When the MOT required electric power is larger than Pu, the series drive appropriate grade value is large, while the EV appropriate grade value is small.

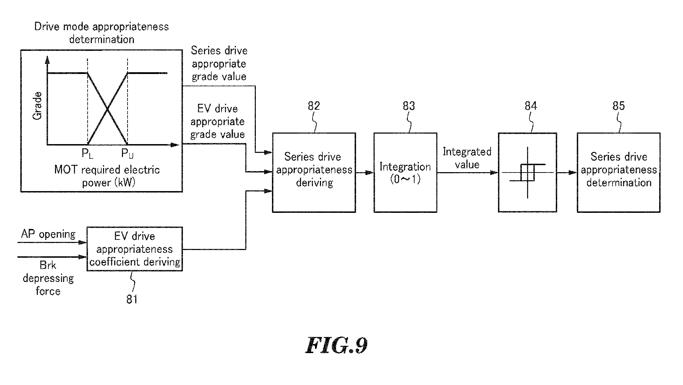

Fig. 9 is an explanatory diagram which explains a deriving of a series drive appropriateness in each of the fussy determination block 55 and the fussy determination block 64. Here, the management ECU 119 (an EV drive appropriateness coefficient deriving block 81) derives an EV drive appropriateness coefficient based on the accelerator pedal opening and the brake pedal depressing effort. This EV drive appropriateness coefficient is a negative value and can be set for three situations such as where the accelerator pedal opening is equal to or larger than a predetermined value, where the accelerator pedal opening is smaller than the predetermined value and where the brake pedal depressing effort is equal to or larger than a predetermined value. The EV drive appropriateness coefficient is set small where the accelerator pedal opening is equal to or larger than the predetermined value, while the coefficient is set large where the brake pedal depressing effort is equal to or larger than the predetermined value.

Then, the management ECU 119 (a series drive appropriateness block 82) derives a series drive appropriateness based on the drive mode appropriateness (the series drive appropriate grade value and the EV drive appropriate grade value) and the EV drive appropriateness coefficient. This deriving is performed based on the following equation (2), for example.

Series drive appropriateness

$$= \text{Series drive appropriate grade value} \times \text{EV drive appropriate coefficient} + \text{EV drive}$$

$$\text{appropriate grade value} \times (\text{- EV drive appropriate coefficient}) \quad\quad ...(2)$$

Next, the management ECU 119 (an integration block 83) performs an integration of series drive appropriateness. This integration is performed so that an integrated value takes a value between 0 to 1. Then, the management ECU 119 determines whether the integrated value derived is larger or smaller than a predetermined threshold Ith (an integrated value determination block 84) to thereby determine whether or not the current driving condition or the current required electric power is appropriate to the series drive mode (a series drive mode appropriateness determination block 85). In this case too, in order to prevent the frequent occurrence of start and stop of the internal combustion engine 109, the determination is performed by using a threshold having a predetermined hysteresis width. Specifically, for example, when the integrated value of series drive appropriateness exceeds 0.8 while the internal combustion engine 109 is stopped, the management ECU 119 determines that the series drive mode is appropriate to the current required electric power. On the other hand, while the internal combustion engine 109 is in operation, it is not until the series drive appropriateness becomes lower than 0.2 that the management ECU 119 determines that the EV drive mode rather than the series drive mode is appropriate to the current required electric power. In this way, it is possible to prevent the frequent occurrence of start and stop of the internal combustion engine 109 by performing the determination by using the integrated value of series drive appropriateness and based on the threshold having the hysteresis width.

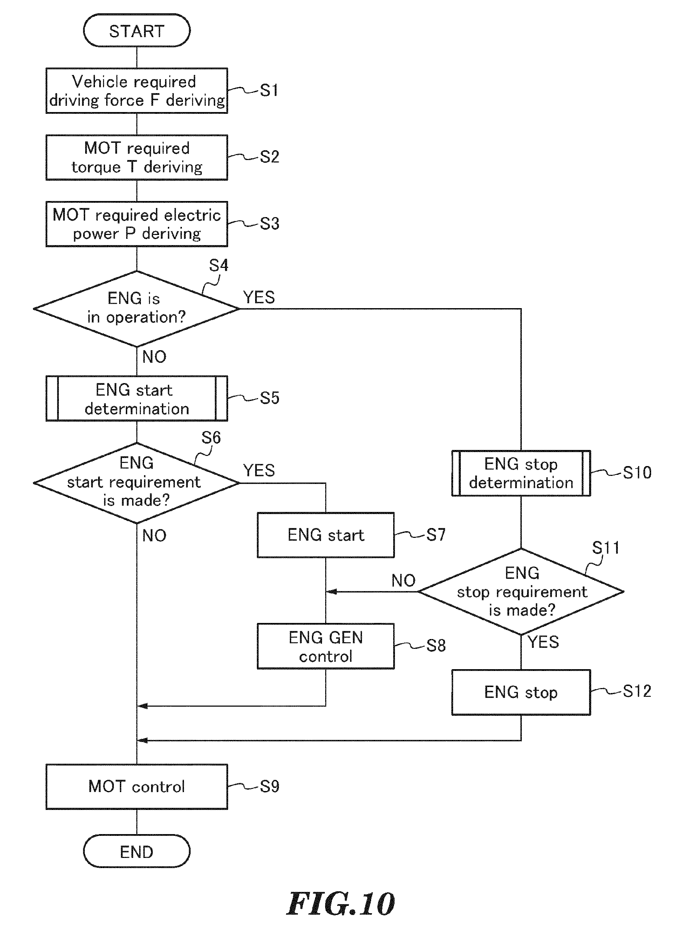

Hereinafter, the operation of the hybrid-vehicle control device according to this embodiment will be described in detail. Fig. 10 is a flowchart showing operations performed by the hybrid-vehicle control device 1 according to the embodiment. Firstly, the management ECU 119 derives a required driving force F required on the motor 101 (step S1), and then derives required torque (MOT required torque) T based on the required driving force F derived (step S2). Following this, the management ECU 119 derives a required electric power required on the motor 101 (MOT required electric power) based on the MOT required torque T, the MOT rotational speed and the VCU output voltage (step S3).

Next, the management ECU 119 determines whether or not the internal combustion engine 109 is in operation (step S4). If it is determined that the internal combustion engine 109 is in operation, the management ECU 119 determines based on the MOT required electric power P whether or not the internal combustion engine 109 is to be started (ENG start determination) (step S5).

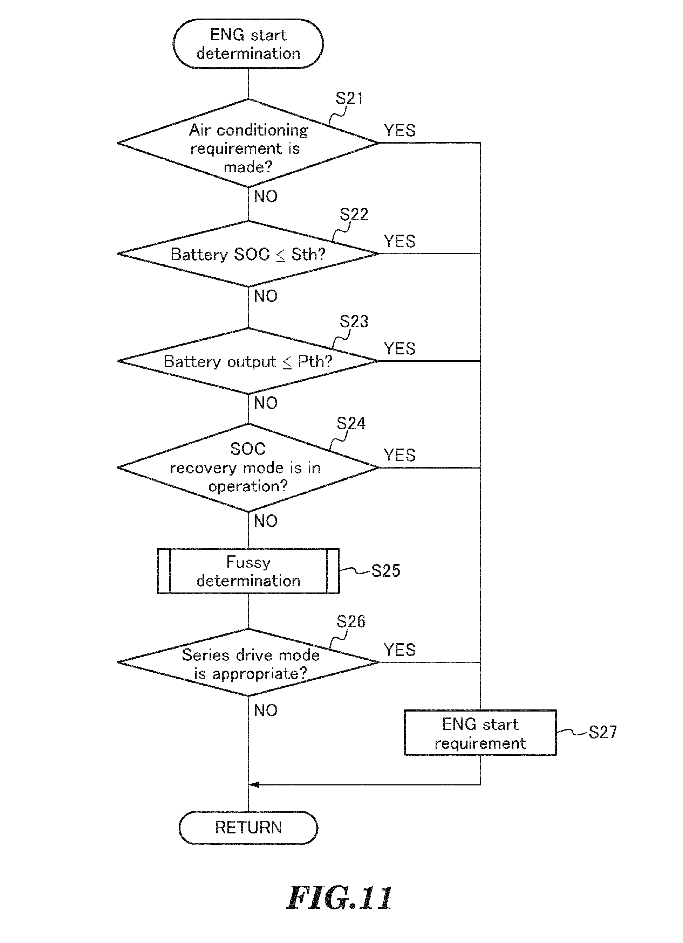

Fig. 11 is a flowchart showing operations performed in the ENG start determination. In determining whether or not the internal combustion engine 109 is to be started, the management ECU 119 determines whether or not air conditioning such as cooling or heating the air inside passenger compartment is required (step S21). If it is determined that air conditioning is not required, the management ECU 119 determines whether or not the SOC of the battery 113 (the battery SOC) is equal to or smaller than the predetermined threshold Sth (step S22). It is noted that the threshold Sth is set so as to have the constant hysteresis width.

If it is determined in step S22 that battery SOC > Sth, the management ECU 119 determines whether or not the maximum value (battery output) that the battery 113 can output is equal to or larger than the predetermined threshold Pth (step S23). If it is determined that battery output > Pth, the management ECU 119 determines whether or not the vehicle 1 is executing the SOC recovery mode currently (step S24). If it is determined that the vehicle 1 is not executing the SOC recovery mode, the management ECU 119 performs the fussy determination (step S25).

In Fig. 10, if it is determined in step S4 that the internal combustion engine 109 is currently in operation, the management ECU 119 determines (ENG stop determination) whether or not to step the internal combustion engine 109 based on the MOT required electric power P (step S10).

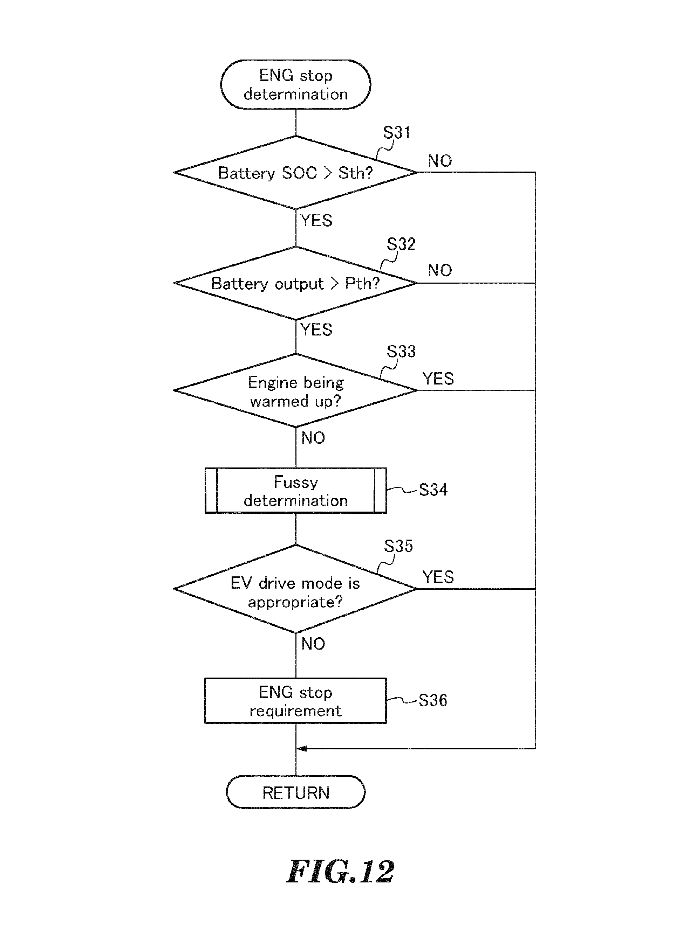

Fig. 12 is a flowchart showing operations performed in the ENG stop determination. In determining whether or not to stop the internal combustion engine 109, the management ECU 119 determines whether or not the SOC of the battery 113 is lower than the predetermined threshold Sth (step S31). It is noted that the threshold Sth is set so as to have the constant hysteresis width in order to prevent the frequent occurrence of switching in control.

If it is determined in step S31 that battery SOC > Sth, the management ECU 119 determines whether or not the maximum value (the battery output) that the battery 113 can output exceeds the predetermined threshold Pth (step S32). If it is determined that battery output > Pth, the management ECU 119 determines whether or not the internal combustion engine 109 is currently being warmed up (step S33). If it is determined that the internal combustion engine 109 is not currently being warmed up, the management ECU 119 performs the fussy determination (step S34).

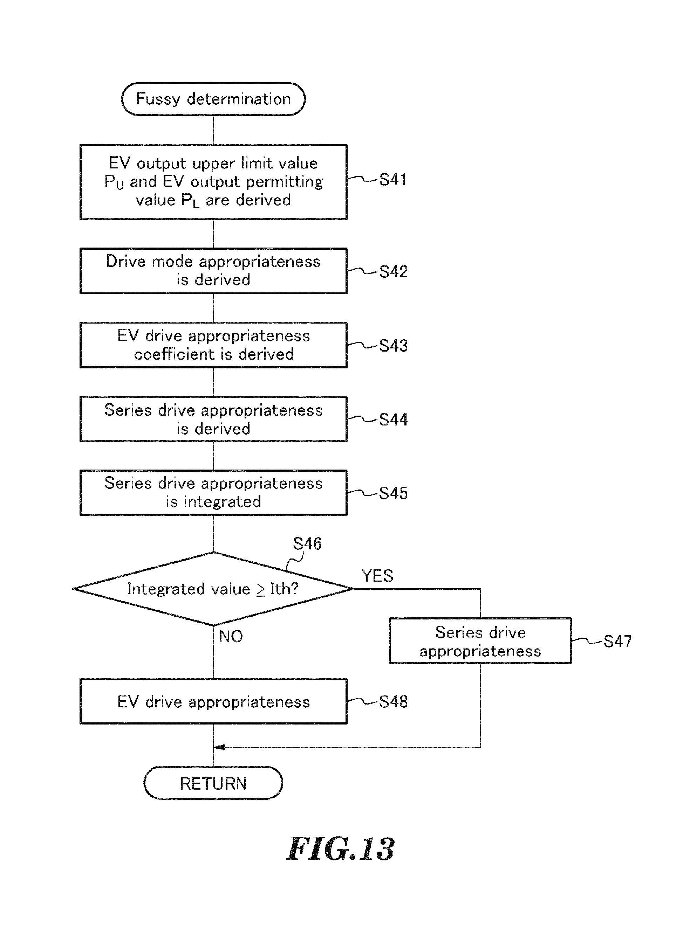

Fig. 13 is a flowchart showing operations performed in the fussy determination which is performed while ENG start determination and ENG stop determination are being performed. Firstly, the management ECU 119 derives an EV output upper limit value Pu and an EV output permitting value $P_L$ based on the temperature and SOC of the battery 113 (step S41). Then, the management ECU 119 sets up a drive mode appropriateness determination membership function from the EV upper limit value Pu and the EV output permitting value $P_L$. Then, the management ECU 119 performs the fussy inference based on the drive mode appropriateness determination membership function and the current required electric power P required on the motor 101 so as to derive a drive mode appropriateness to the current required electric power P of the motor 101 (step S42).

Next, the management ECU 119 derives an EV drive appropriateness coefficient based on the accelerator pedal opening and the brake pedal depressing effort (step S43). Then, the management ECU 119 derives a series drive appropriateness based on the derived drive mode appropriateness and EV drive appropriateness coefficient (step S44).

Next, the management ECU 119 performs an integration of series drive appropriateness (step S45). Then, the management ECU 119 determines whether or not an integrated value of ENG start requirement frequency is equal to or larger than the threshold Ith. The threshold Ith is set so as to have the constant hysteresis width. If it is determined in step S45 that integrated value ≥ Ith, determining that the current required electric power P of the motor 101 is appropriate to the series drive mode (step S47), the management ECU 119 ends the fussy determination. If it is determined in step S45 that integrated value < Ith, determining that the current required electric power P of the motor 101 is appropriate to the EV drive mode (step S48), the management ECU 119 ends the fussy determination.

Returning to Fig. 11, the management ECU 119 determines whether or not it is determined in the fussy determination performed in step S25 that the current required electric power P of the motor 101 is appropriate to the series drive mode (step S26). If it is determined that the current required electric power P of the motor 101 is appropriate to the series drive mode, determining that the internal combustion engine 109 is required to start its operation, the management ECU 119 proceeds with the next step (step S27). In addition, if it is determined in step S21 that air conditioning is required, if it is determined in step S22 that battery SOC ≤ Sth, if it is determined in step S23 that battery output ≤ Pth, or if it is determined in step S24 that the SOC recovery mode is being executed, determining that the internal combustion engine 109 is required to start its operation, the management ECU 119 proceeds with the next step (step S27). If it is determined in step S26 that the current required electric power P of the motor 101 is appropriate to the EV drive mode, determining that the internal combustion engine 109 is not required to start its operation, the management ECU 119 proceeds with the next step.

Returning to Fig. 12, the management ECU 119 determines whether or not it is determined in the fussy determination performed in step S34 that the current required electric power P of the motor 101 is appropriate to the EV drive mode (step S35). If it is determined that the current required electric power P of the motor 101 is appropriate to the EV drive mode, determining that the internal combustion engine 109 is required to stop its operation, the management ECU 119 proceeds with the next step (step S36).

In Fig. 12, if it is determined in step S31 that battery SOC ≤ Sth, if it is determined in step S32 that battery output ≤ Pth, if it is determined in step S33 that the internal combustion engine 109 is being warmed up, or if it is determined in step S35 that the current required electric power P of the motor 101 is appropriate to the EV drive mode, determining that the internal combustion engine 109 is not required to stop its operation, the management ECU 119 proceeds with the next step.

Returning to Fig. 10, the management ECU 119 determines whether or not the ENG start requirement is made in the ENG start determination in step S5 (step S6). If it is determined that in step S6 that the ENG start requirement is made, in order to drive the vehicle in the series drive, the management ECU 119 starts the internal combustion engine 109 (step S7) and controls the internal combustion engine 109 and the generator 107 (step S8). At the same time, the management ECU 119 controls the motor 101 based on the required torque T (step S9). On the contrary, if it is determined in step S5 that the ENG start requirement is not made, in order to drive the vehicle in the EV drive mode without starting the internal combustion engine 109, the management ECU 119 controls the motor 101 based on the required torque T (step S9).

Additionally, the management ECU 119 determines whether or not an ENG stop requirement is made based on the ENG stop determination in step S10 (step S11). If it is determined in step S11 that the ENG stop requirement is not made, in order to keep the vehicle driven in the series drive mode, the management ECU 119 controls the internal combustion engine 109 and the generator 107 (step S8) and at the same time, controls the motor 101 (step S9). On the contrary, if it is determined in step S11 that the ENG stop requirement is made, in order to drive the vehicle in the EV drive mode, the management ECU 119 stops the internal combustion engine 109 (step S12) and controls the motor 101 based on the required torque T (step S9).

Thus, as has been described heretofore, according to the hybrid-vehicle control device and the control method of this embodiment, the start and stop of the internal combustion engine 109 are determined based on the EV output upper limit value which is set according to the state of the battery 113, the EV output permitting value and the required electric power, and therefore, it is possible not only to ensure the desired required electric power but also to prevent the battery 113 from being discharged excessively, thereby making it possible to enhance the energy efficiency. In addition, the start and stop of the internal combustion engine 109 are determined based on the integrated value of series drive appropriateness and the thresholds having the hysteresis widths, and therefore, the unnecessary control of the internal combustion engine 109 is eliminated, whereby the internal combustion engine 109 can be controlled more accurately based on the intention of the user. Additionally, whether to start the internal combustion engine 109 is determined by performing the fussy determination based on the required electric power, and therefore, there is no possibility that the shortage of driving force results from the shortage of output from the battery 113, and the unnecessary control of the internal combustion engine 109 is eliminated. In addition, the intention of the user such as the accelerator pedal opening and the brake pedal depressing effort is taken into consideration, and therefore, it is possible not only to enhance the drivability but also to enhance the energy efficiency further. Additionally, the stop of the internal combustion engine 109 is determined by taking further the SOC and output of the battery 113 into consideration, and therefore, there is no possibility that the shortage of driving force results from the shortage of output from the battery 113, thereby making it possible to ensure the required electric power.

It is noted that the invention is not limited to the embodiment described heretofore, and hence, modifications and/or improvements can be made thereto as required. For example, when the accelerator pedal opening is maximum in the internal combustion engine start determination described above, the internal combustion engine 109 may be controlled so as to start its operation irrespective of the other conditions.

Description of Reference Numerals

101 motor (MOT)
107 generator (GEN)
109 multi-cylinder internal combustion engine (ENG)
113 battery (BATT)
115 clutch
117 accessory (ACCESSORY)
119 management ECU (MG ECU)

**Claims**

1. A control device of a hybrid vehicle including an internal combustion engine, a motor, a generator which generates electric power based on power of the internal combustion engine, and a battery which stores electric power generated by the motor or the generator to supply the electric power to the motor,
   wherein the hybrid vehicle is able to drive in an EV drive mode in which the motor is driven by electric power of the battery only and a series drive mode in which the motor is driven by electric power generated by the generator based on power of the internal combustion engine, and
   the control device comprises:

   a required driving force deriving section for deriving a required driving force required on the motor based on a vehicle speed and an accelerator pedal opening;
   a required electric power deriving section for deriving required electric power based on the required driving force and a rotational speed of the motor;
   an EV output upper limit value deriving section for deriving an EV output upper limit value which is a maximum value that the battery enables to output, based on a remaining capacity of the battery and a temperature of the battery;
   an EV output permitting value deriving section for deriving an EV output permitting value from an upper limit value of an output which satisfies {(a loss produced when the hybrid vehicle is driven in the EV drive mode) + (a loss produced when electric power corresponding to electric power consumed in the EV drive mode is generated)} < (a loss produced in the series drive mode), based on a remaining capacity of the battery and a temperature of the battery;
   an internal combustion engine operation appropriateness deriving section for deriving an internal combustion engine operation appropriateness based on at least the required electric power, the EV output upper limit value and the EV output permitting value;
   an internal combustion engine starting section for starting the internal combustion engine when an integrated value of the internal combustion engine operation appropriateness exceeds a first predetermined value while the internal combustion engine stops; and
   an internal combustion engine stopping section for stopping the internal combustion engine when an integrated value of the internal combustion engine operation appropriateness becomes lower than a second predetermined value which is lower than the first predetermined value while the internal combustion engine operates.

2. The control device of the hybrid vehicle according to claim 1,
   wherein the internal combustion engine operation appropriateness deriving section has an appropriateness deriving section for deriving an EV drive mode appropriateness and a series drive appropriateness by performing a fussy determination based on the required electric power from a membership function which is set based on the EV output upper limit value and the EV output permitting value, and
   the appropriateness deriving section derives the internal combustion engine operation appropriateness based on at least the EV drive mode appropriateness and the series drive mode appropriateness.

**3.** The control device of the hybrid vehicle according to claim 2,
wherein the internal combustion engine operation appropriateness deriving section has a coefficient deriving section for deriving an EV appropriateness coefficient based on the accelerator pedal opening and a brake pedal depressing effort, and
the appropriateness deriving section derives the internal combustion engine operation appropriateness based on the EV appropriateness coefficient, the EV drive mode appropriateness and the series drive mode appropriateness.

**4.** The control device of the hybrid vehicle according to any one of claims 1 to 3,
wherein the EV output upper limit value and the EV output permitting value are set by a smaller value of values which are derived individually based on a remaining capacity of the battery and a temperature of the battery.

**5.** The control device of the hybrid vehicle according to any one of claims 1 to 4,
wherein the EV output upper limit value and the EV output permitting value are set smaller as a remaining capacity of the battery decreases.

**6.** The control device of the hybrid vehicle according to any one of claims 1 to 5,
wherein the EV output upper limit value and the EV output permitting value are set smaller as a temperature of the battery decreases.

**7.** The control device of the hybrid vehicle according to any one of claims 1 to 6,
wherein the internal combustion engine stopping section stops the internal combustion engine when an integrated value of the internal combustion engine operation appropriateness becomes lower than the second predetermined value and a remaining capacity of the battery is equal to or larger than a predetermined value while the internal combustion engine operates.

**8.** The control device of the hybrid vehicle according to claim 7,
wherein the internal combustion engine stopping section stops the internal combustion engine when an integrated value of the internal combustion engine operation appropriateness becomes lower than the second predetermined value, a remaining capacity of the battery is equal to or larger than the predetermined value, and a maximum value which the battery enables to output is equal to or larger than a predetermined value while the internal combustion engine operates.

**9.** A control method of a hybrid vehicle including an internal combustion engine, a motor, a generator which generates electric power based on power of the internal combustion engine, and a battery which stores electric power generated by the motor or the generator to supply the electric power to the motor,
wherein the hybrid vehicle is able to drive in an EV drive mode in which the motor is driven by electric power of the battery only and a series drive mode in which the motor is driven by electric power generated by the generator based on power of the internal combustion engine, and
the control method comprises the steps of:

deriving a required driving force required on the motor based on a vehicle speed and an accelerator pedal opening;
deriving required electric power based on the required driving force and a rotational speed of the motor;
deriving an EV output upper limit value which is a maximum value that the battery enables to output, based on a remaining capacity of the battery and a temperature of the battery;
deriving an EV output permitting value from an upper limit value of an output which satisfies {(a loss produced when the hybrid vehicle is driven in the EV drive mode) + (a loss produced when electric power corresponding to electric power consumed in the EV drive mode is generated)} < (a loss produced in the series drive mode), based on a remaining capacity of the battery and a temperature of the battery;
deriving an internal combustion engine operation appropriateness based on at least the required electric power, the EV output upper limit value and the EV output permitting value;
starting the internal combustion engine when an integrated value of the internal combustion engine operation appropriateness exceeds a first predetermined value while the internal combustion engine stops; and
stopping the internal combustion engine when an integrated value of the internal combustion engine operation appropriateness becomes lower than a second predetermined value which is lower than the first predetermined value while the internal combustion engine operates.

**FIG.1**

MOT rotational
speed

VCU output
voltage

MOT
required
electric
power P
deriving

~13

14

AP opening

Battery
temperature

Battery SOC

Air conditioning
requirement

Shift range

Brk depressing
effort

ENG operation
state

Charge switch

ENG
start/stop
determination

ENG start
determination

ENG stop
determination

ENG operation
requirement

No

0

Yes

17

ENG
GEN
control

Vehicle speed

AP opening

Shift range

Brk depressing
effort

Required
drive force
F deriving

MOT
required
torque T
deriving

11

12

18

MOT torque
command

*FIG.2*

MOT required electric power deriving

22

VCU voltage (V) → Loss map

Loss(kW)

Nmot(rpm)

MOT loss (kW)

MOT rotational speed (rpm)

MOT required torque T (Nm)

× × MOT shaft output command (kW)

21

2 × π /60

+
+

23

MOT required electric power P (kW)

**FIG.3**

ENG GEN control

**FIG.4**

18

ENG start
determination

Air conditioning
requirement made — 51

Battery SOC → SOC ≤ Sth — 52

Battery output ≤ Pth — 53

SOC recovery
mode in operation — 54

55

Fussy
determination → Series drive
appropriateness — 56

OR → ENG start
requirement

57

**FIG.5**

ENG stop
determination

Battery SOC → [ SOC > Sth ] 61

[ Battery output > Pth ] 62

[ Not in warming-up operation ] 63

64 [ Fussy determination ] → [ EV drive appropriateness ] 65

[ AND ] → [ ENG stop requirement ] 66

**FIG.6**

FIG.7

**FIG.8**

Drive mode appropriateness
determination

Grade

$P_L$   $P_U$

MOT required electric
power (kW)

Series drive
appropriate
grade value

EV drive
appropriate
grade value

AP opening

Brk
depressing
force

EV drive
appropriateness
coefficient deriving

81

82

Series drive
appropriateness
deriving

83

Integration
(0～1)

Integrated
value

84

85

Series drive
appropriateness
determination

*FIG.9*

START

Vehicle required
driving force F deriving — S1

MOT required
torque T deriving — S2

MOT required electric
power P deriving — S3

S4
ENG is
in operation? — YES

NO

ENG start
determination — S5

S6
ENG
start requirement
is made? — YES

NO

ENG start — S7

ENG GEN
control — S8

ENG stop
determination — S10

S11
ENG
stop requirement
is made? — NO

YES

ENG stop — S12

MOT control — S9

END

*FIG.10*

```
              ┌─────────────────┐
              │    ENG start    │
              │  determination  │
              └─────────────────┘
                       │
                       │          S21
              ◇─────────────────◇        YES
             ◇  Air conditioning  ◇──────────────┐
              ◇  requirement is  ◇                │
               ◇     made?     ◇                  │
                 ◇─────────◇                      │
                     │ NO                         │
                     │          S22               │
              ◇─────────────────◇        YES      │
             ◇  Battery SOC ≤ Sth? ◇──────────────┤
              ◇─────────────────◇                 │
                     │ NO                         │
                     │          S23               │
              ◇─────────────────◇        YES      │
             ◇  Battery output ≤ Pth? ◇───────────┤
              ◇─────────────────◇                 │
                     │ NO                         │
                     │          S24               │
              ◇─────────────────◇        YES      │
             ◇       SOC        ◇──────────────────┤
              ◇  recovery mode is in ◇             │
               ◇   operation?    ◇                 │
                 ◇─────────◇                       │
                     │ NO                          │
              ┌──────────────────┐                 │
              │║     Fussy      ║│   S25           │
              │║  determination ║│                 │
              └──────────────────┘                 │
                     │          S26                │
              ◇─────────────────◇        YES       │
             ◇  Series drive mode  ◇───────────────┤
              ◇  is appropriate?  ◇                │
                 ◇─────────◇                       │
                     │ NO                          │
                     │              ┌──────────────────┐
                     │              │    ENG start     │  S27
                     │              │   requirement    │
                     │              └──────────────────┘
                     │◀─────────────────────────────┘
                     │
              ┌─────────────┐
              │   RETURN    │
              └─────────────┘
```

## *FIG.11*

```
        ┌──────────────────┐
        │     ENG stop     │
        │  determination   │
        └──────────────────┘
                 │
                 │              S31
                ╱╲                          NO
              ╱    ╲
            ╱        ╲
          ╱  Battery   ╲ ──────────────────────┐
          ╲ SOC > Sth? ╱                        │
            ╲        ╱                           │
              ╲    ╱                             │
                ╲╱                               │
                 │ YES                           │
                 │              S32              │
                ╱╲                          NO   │
              ╱    ╲                             │
            ╱        ╲                           │
          ╱  Battery   ╲ ──────────────────────┤
          ╲output > Pth?╱                       │
            ╲        ╱                           │
              ╲    ╱                             │
                ╲╱                               │
                 │ YES                           │
                 │              S33              │
                ╱╲                          YES  │
              ╱    ╲                             │
            ╱        ╲                           │
          ╱   Engine   ╲ ──────────────────────┤
          ╲being warmed╱                         │
            ╲  up?   ╱                           │
              ╲    ╱                             │
                ╲╱                               │
                 │ NO                            │
        ┌─┃──────────────┃─┐                     │
        │ ┃    Fussy     ┃ │ ── S34              │
        │ ┃ determination┃ │                     │
        └─┃──────────────┃─┘                     │
                 │              S35              │
                ╱╲                          YES  │
              ╱    ╲                             │
            ╱        ╲                           │
          ╱  EV drive  ╲ ──────────────────────┤
          ╲ mode is    ╱                         │
            ╲appropriate?                        │
              ╲    ╱                             │
                ╲╱                               │
                 │ NO                            │
        ┌──────────────────┐                     │
        │     ENG stop     │ ── S36              │
        │   requirement    │                     │
        └──────────────────┘                     │
                 │←────────────────────────────┘
        ┌──────────────────┐
        │      RETURN      │
        └──────────────────┘
```

## FIG.12

FIG.13

## INTERNATIONAL SEARCH REPORT

| | International application No. |
|---|---|
| | PCT/JP2013/050493 |

A. CLASSIFICATION OF SUBJECT MATTER
*B60K6/20*(2007.10)i, *B60K6/448*(2007.10)i, *B60K6/48*(2007.10)i, *B60W10/26*
(2006.01)i, *B60W20/00*(2006.01)i

According to International Patent Classification (IPC) or to both national classification and IPC

B. FIELDS SEARCHED

Minimum documentation searched (classification system followed by classification symbols)
B60K6/20, B60K6/448, B60K6/48, B60W10/26, B60W20/00

Documentation searched other than minimum documentation to the extent that such documents are included in the fields searched
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2011/078189 A1 (Honda Motor Co., Ltd.), 30 June 2011 (30.06.2011), entire text; all drawings & EP 2517938 A1 | 1-9 |
| A | JP 2007-223404 A (Honda Motor Co., Ltd.), 06 September 2007 (06.09.2007), entire text; all drawings (Family: none) | 1-9 |
| A | JP 11-89007 A (Nissan Motor Co., Ltd.), 30 March 1999 (30.03.1999), paragraphs [0009] to [0014] (Family: none) | 1-9 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 February, 2013 (05.02.13) | 19 February, 2013 (19.02.13) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2013/050493

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2006-20401 A  (Fuji Heavy Industries Ltd.),<br>19 January 2006 (19.01.2006),<br>paragraphs [0022], [0023]<br>(Family: none) | 1-9 |
| A | JP 2007-22118 A  (Nissan Motor Co., Ltd.),<br>01 February 2007 (01.02.2007),<br>paragraphs [0020] to [0026]<br>(Family: none) | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09224304 A